# EUROPEAN PATENT SPECIFICATION

(11) **EP 4 340 609 B1**
(45) Date of publication and mention of the grant of the patent: **12.08.2026**
(21) Application number: 22728666.3
(22) Date of filing: 03.05.2022
(51) Int. Cl.: A01N 1/124, A01N 1/125, A01N 1/126

(54) **POULTRY SPERM STORAGE MEDIUM, METHOD OF ITS PREPARATION AND USE**
AUFBEWAHRUNGSMEDIUM FÜR GEFLÜGELSPERMA, VERFAHREN ZU SEINER HERSTELLUNG UND VERWENDUNG
MILIEU DE STOCKAGE DE SPERME DE VOLAILLE, SON PROCÉDÉ DE PRÉPARATION ET SON UTILISATION

(30) Priority: 19.05.2021 SK PV702021 U
(43) Date of publication of application: 27.03.2024
(73) Proprietor: Slovenská pol'nohospodárska univerzita v Nitre, 949 76 Nitra (SK)
(72) Inventor: SLANINA, Tomás, 951 53 Babindol (SK); MISKEJE, Michal, 949 01 Nitra (SK); MASSÁNYI, Peter, 949 01 Nitra (SK)
(74) Representative: Wörz, Volker Alfred
(86) International application number: PCT/IB2022/054066
(87) International publication number: WO 2022/243774

(56) References cited:
- CN-A- 101 310 729
- STANISHEVSKAYA OLGA ET AL: "Effects of Saccharides Supplementation in the Extender of Cryopreserved Rooster (Gallus domesticus) Semen on the Fertility of Frozen/Thawed Spermatozoa", ANIMALS, vol. 11, no. 1, 1 January 2021 (2021-01-01), pages 189, XP055947007, Retrieved from the Internet <URL:https://www.ncbi.nlm.nih.gov/pmc/articles/PMC7830731/pdf/animals-11-00189.pdf> DOI: 10.3390/ani11010189
- SLANINA T. ET AL: "Effect of taurine on turkey (Meleagris gallopavo) spermatozoa viability and motility", CZECH JOURNAL OF ANIMAL SCIENCE, vol. 63, no. No. 4, 19 March 2018 (2018-03-19), pages 127 - 135, XP055947002, ISSN: 1212-1819, Retrieved from the Internet <URL:https://www.agriculturejournals.cz/publicFiles/79_2017-CJAS.pdf> DOI: 10.17221/79/2017-CJAS
- SLANINA TOMÁS ET AL: "Caffeine strongly improves motility parameters of turkey spermatozoa with no effect on cell viability", ACTA VETERINARIA HUNGARICA., vol. 66, no. 1, 1 March 2018 (2018-03-01), HU, pages 137 - 150, XP055947003, ISSN: 0236-6290, Retrieved from the Internet <URL:http://real.mtak.hu/79132/1/004.2018.013.pdf> DOI: 10.1556/004.2018.013
- SLANINA TOMAS ET AL: "THE EFFECT OF DIFFERENT CONCENTRATION OF TREHALOSE ON TURKEY SPERMATOZOA MOTILITY IN VITRO", JOURNAL OF MICROBIOLOGY, BIOTECHNOLOGY AND FOOD SCIENCES, vol. 1, no. 4, 1 February 2012 (2012-02-01), Nitra, pages 573 - 582, XP055947147, ISSN: 1338-5178
- PARTYKA AGNIESZKA ET AL: "The Effect of L-Carnitine, Hypotaurine, and Taurine Supplementation on the Quality of Cryopreserved Chicken Semen", BIOMED RESEARCH INTERNATIONAL, vol. 2017, 1 January 2017 (2017-01-01), pages 1 - 8, XP055947253, ISSN: 2314-6133, Retrieved from the Internet <URL:https://downloads.hindawi.com/journals/bmri/2017/7279341.pdf> DOI: 10.1155/2017/7279341

## Description

### Field of technology

The technical solution concerns the poultry sperm storage medium and the method of its preparation, while the solution belongs to the field of technologies used in animal reproduction and artificial insemination of animals.

### Prior art

STANISHEVSKAYA OLGA ET AL: "Effects of Saccharides Supplementation in the Extender of Cryopreserved Rooster (Gallus domesticus) Semen on the Fertility of Frozen/ Thawed Spermatozoa", ANIMALS, vol. 11, no. 1, (2021-01-01), page 189, XP55947007 discloses a cryopreservation medium for rooster semen comprising per 100 ml: monosodium glutamate 1.92 g (114 mM), fructose 0.8 g (44 mM), potassium acetate 0.5 g (51 mM), polyvinylpyrrolidone, 0.3 g (8.3 uM), and protamine sulphate 0.032 g (3.27 uM). For the experimental diluents LCM-T10 and LCM-T20, the composition was calculated with partial replacement of fructose with trehalose: fructose 0.72 g (40 mM) + trehalose 0.166 g (4.8 mM) and fructose 0.64 g (36 mM) + trehalose 0.326 g (9.5 mM).

SLANINA T. ET AL: "Effect of taurine on turkey (Meleagris gallopavo) spermatozoa viability and motility", CZECH JOURNAL OF ANIMAL SCIENCE, vol. 63, no. No. 4, (2018-03-19), pages 127-135, XP55947002 discloses cryo-preservation compositions for turkey spermatozoa comprising: NaCl 154 mmol/L (0.9 %) and from 0.08 to 10 g/L (0.6-80 mmol/L) taurine which shows a preventive effect on spermatozoa parameters.

SLANINA TOMAS ET AL: "Caffeine strongly improves motility parameters of turkey spermatozoa with no effect on cell viability", ACTA VETERINARIA HUNGARICA., vol. 66, no. 1, (2018-03-01), pages 137-150, XP55947003 discloses a preservation solution for turkey spermatozoa comprising: NaCl 154 mmol/L (0.9 %) and from 0.08 to 10 g/L (0.4-51.5 mmol/L) caffeine which shows a preventive effect on spermatozoa motility.

SLANINA TOMAS ET AL: "THE EFFECT OF DIFFERENT CONCENTRATION OF TREHALOSE ON TURKEY SPERMATOZOA MOTILITY IN VITRO", JOURNAL OF MICROBIOLOGY, BIOTECHNOLOGY AND FOOD SCIENCES, vol. 1, no. 4, (2012-02-01), pages 573-582, XP55947147 discloses a preservation solution for turkey spermatozoa comprising: NaCl 154 mmol/L (0.9 %) and from 1.25 to 10 g/L (3.7-29.2 mmol/L) trehalose which shows a preventive effect on spermatozoa motility.

PARTYKA AGNIESZKA ET AL: "The Effect of L-Carnitine, Hypotaurine, and Taurine Supplementation on the Quality of Cryopreserved Chicken Semen", BIOMED RESEARCH INTERNATIONAL, vol. 2017, (2017-01-01), pages 1-8, XP55947253 discloses a preservation solution for chicken semen comprising: 1.4g sodium glutamate, 0.14 g potassium citrate*H2O, 0.7 g glucose, 0.2 g D-fructose (110 mM), 0.7 g inositol, 0.1 g polyvinylpyrrolidone, 0.02 g protamine sulfate, 0.98 g anhydrous sodium hydrogen phosphate, and 0.21 g anhydrous sodium dihydrogen phosphate in 100ml distilled water; pH 7.3, osmotic pressure 390 mOsmol/kg and 1 mM or 10 mM of taurine. The addition of taurine increases sperm survival.

CN 101 310 729 A discloses a sheep semen dilution solution comprising inter alia: fructose, trehalose, caffeine, taurine and penicillin.

At present, artificial insemination is used in large poultry farms as the sole means of achieving the required level of fertility and also for disease control during the main laying cycle. The necessary part of artificial insemination is to ensure appropriate collection and subsequent processing of ejaculate. Due to the low volume of poultry ejaculate (on average 0.3 ml in turkeys and 0.5 ml in roosters) and the high sperm concentration (roosters 6 and turkeys 12 billion spermatozoa in one millilitre) from an individual - see Donoghue, A. M., & Wishart, G. J. (2000). Storage of poultry semen. Animal Reproduction Science, 62(1-3), 213-232, https://doi.org/10.1016/s0378-4320(00)00160-3, ejaculate obtained from several individuals is always used for insemination of females - the so-called heteromorphic sperm.

For this reason, the heteromorphic sperm used in the poultry breeding and management program is always diluted (increasing its volume) in order to achieve more insemination doses, to cover more inseminated females and, of course, to obtain more fertilized eggs, which subsequently correlates with favourable economic impacts.

Despite the fact that seminal plasma (under-represented in poultry) plays an important role in the activation of spermatozoa in the female reproductive system, it has adverse effects on the long-term survival of spermatozoa outside the body - see Douard, V., Hermier, D., Labbe, C., Magistrini, M., & Blesbois, E. (2005). Role of seminal plasma in damage to turkey spermatozoa during in vitro storage. Theriogenology, 63(1), 126-137.

Under physiological conditions, spermatozoa are activated by seminal plasma in the ejaculate and subsequently released from their storage site in the female reproductive tract. Spermatozoa are exposed to seminal plasma in a long term only during in vitro storage. For this reason, it is common to add semen extenders to ejaculate, which on the one hand dilute toxic substances in the seminal plasma and on the other hand provide suitable nutrients for spermatozoa during their in vitro storage and at the same time suppress the activity of their metabolic by-products.

The addition of a semen extender also makes it possible to prepare several insemination doses containing a specific number (concentration) of spermatozoa, which is determined to be optimal to ensure the desired fertility in inseminated animals - see Morrell, J. (2011), Artificial Insemination: Current and Future Trends. Artificial Insemination in Farm Animals.

Turkey spermatozoa rapidly lose viability and fertilization capacity if stored undiluted or diluted at physiological and / or laboratory temperature. Another significant indicator of the quality of stored ejaculate is spermatozoa motility, which is also significantly negatively affected by increasing storage time. Already within 1-1.5 hours of in vitro liquid storage, there is a significant decrease in the given parameter, which leads to its automatic exclusion from the insemination process - see Slanina, T., Petrovicova, L., Miskeje, M., Knizat, L., Mirda, J., Lukac, N., Trandzik, J., Petrovicova, L, Massanyi, P. (2015). The effect of diluent, temperature and age on turkey spermatozoa motility in vitro. Journal of Applied Animal Research, 43(2), 131-136.

In order to maintain motility, viability and fertilization ability in spermatozoa stored in vitro, ejaculate should be cooled to 2-8 °C and diluted in a suitable extender - see Douard, V., Hermier, D., Magistrini, M., Labbe, C., & Blesbois, E. (2004). Impact of changes in composition of storage medium on lipid content and quality of turkey spermatozoa. Theriogenology, 61(1), 1-13.

The basic precondition for proper storage of ejaculate in the liquid state is that the birds' (poultry) spermatozoa should be diluted in a medium with a relatively stable physicochemical composition, based on the ionic environment of the male reproductive tract, with the addition of glycolytic substrate and buffer - see Douard, V., Hermier, D., Labbe, C., Magistrini, M., & Blesbois, E. (2005). Role of seminal plasma in damage to turkey spermatozoa during in vitro storage. Theriogenology, 63(1), 126-137.

It follows from this, that semen extenders should be saline solutions providing an osmotic pressure of 330-400 mOsm and a pH of 7.0-7.4 identical to semen plasma. The media should also contain various energy substrates. For this reason, it is recommended to add carbohydrates (glucose or fructose), energy-providing components (citrate, glutamate, acetate) to the semen extenders used for poultry ejaculate - see Thurston, R. J. 1995.

Storage of poultry semen above freezing for twenty-four to forty-eight hours. In Bakst, M. R. and Wishart, G. J. (eds) Proceedings of the First International Symposium on the Artificial Insemination of Poultry. The Poultry Science Association, Savoy, Illinois, p. 107-122., but also substances with a protective effect against negative in vitro effects such as antioxidants and antibiotics - see Slanina, T., Brandysova, M., Massanyi, P. (2016) Effect of tylosin on turkey spermatozoa motility. In Animal physiology 2016. Brno: Mendel University in Brno, 221-229. ISBN 978-80-7509416-2.

At the time of ejaculation, birds' spermatozoa contain very few intracellular energy reserves, but repeated studies have demonstrated that spermatozoa can utilize various types of energy metabolites in the extracellular medium to ensure their basal metabolism and viability - see Blesbois, E., & Brillard, J. P. (2007). Specific features of in vivo and in vitro sperm storage in birds. Animal, 1(10), 1472-1481. Even if the ideal composition of the media used is achieved, the individual quality parameters of spermatozoa stored in vitro at the body temperature of birds (41 °C) are maintained only for a short period of time (several minutes) - see Slanina, T., Petrovicova, L., Miskeje, M., Knizat, L., Mirda, J., Lukac, N., Trandzik, J., Petrovicova, T, Massanyi, P. (2015). The effect of diluent, temperature and age on turkey spermatozoa motility in vitro. Journal of Applied Animal Research, 43(2), 131-136.

To improve in vitro storage conditions, spermatozoa metabolism must be reduced, which is generally achieved by lowering the storage temperature - see Miskeje, M., Slanina, T., Kolencikova, A., Knizat, L., Mirda, J., Petrovicova, T, Massanyi, P. (2013). The effect of different temperature and medium on turkey spermatozoa motility in vitro. Journal of microbiology biotechnology and food sciences, 2(1), 1491-1501. ISSN 1338-5178. For this reason, diluted and undiluted spermatozoa should be stored at a temperature of about 5 °C, which minimizes spermatozoa metabolism and some harmful catabolic processes, as well as the multiplication of microorganisms. Rooster spermatozoa can be stored under anaerobic conditions, thereby maintaining ATP levels and spermatozoa fertilization ability.

Unlike rooster spermatozoa, turkey spermatozoa have poor glycolytic capacity and require aerobic phosphorylation to maintain energy levels, which require storage under aerobic conditions - see Hocking, P. (Ed.). (2009). Biology of breeding poultry. Several types of commercial diluents are currently available on the market, which contain various combinations of carbohydrates, amino acids as well as antioxidants useful for spermatozoa storage. Their problem is low efficiency.

### The essence of the invention

In the current state of the art, the search for an optimal semen extender used for the storage of poultry ejaculate, which would bring more efficient and economically advantageous results to farmers, is still topical, since the solutions known so far have a relatively low efficiency. The shortcomings of the hitherto known solutions are largely eliminated by the present technical solution. The essence of the technical solution lies in a specially developed semen extender, which is poultry sperm storage medium in vitro at a temperature of 5-8 °C. The medium brings not only increase in the volume and quantity of insemination doses, but also can provide several hours of prolongation of survival, fertility and motility of stored spermatozoa.

The advantages of the present technical solution compared to the state of the art are the following:
1. Improving the quality of stored ejaculate
   The advantage over commercial extenders available so far is that the medium according to the present solution can not only maintain individual spermatozoa motility parameters for several hours, but can even increase this critically important indicator of spermatozoa quality. The beneficial effect of the given medium on spermatozoa motility is so significant that the total motility as well as progressive motility is even after 6 hours of cultivation demonstrably higher not only compared to commercially available semen extenders, but even higher than in fresh ejaculate measured after the collection itself.
2. High fertility
   The medium according to the present solution ensures the fertility of eggs at the level of more than 93%, even after artificial insemination of hens, which was performed after at least 4-hour storage of collected ejaculate.
3. Price

An equally important advantage of a given medium is that it has a significantly simpler composition compared to competing solutions. It requires fewer components, which are furthermore commonly available. The given fact leads to its simpler and faster production, which makes this product more economically advantageous for the breeder, of course without loss on the quality requirements of the breeder.

The poultry sperm liquid storage medium contains a mixture of: D-levulose, α-D-glucopyranosyl-α-D-glucopyranoside, 1,3,7-trimethylxanthine, 2-aminoethanesulfonic acid, sodium chloride and water.

The mixture is prepared in the form of an aqueous solution. The preparation of the medium consists of mixing the individual components. Sodium chloride is dissolved in water for injection, whereby the buffer thus prepared must have an osmolarity of 270-320 mOsm.I⁻¹ and a pH in the range of 4.5 to 7.0. Then using the buffer, a D-levulose solution, a α-D-glucopyranosyl-α-D-glucopyranoside solution, a 1,3,7-trimethylxanthine solution and a 2-aminoethanesulfonic acid solution is prepared, and these solutions are mixed. After dissolving the individual added components, a final mixture - medium is produced, while antibiotics can optionally also be added to the mixture.

The finished mixture is then stored at 5-8 °C for a maximum of one year. The medium thus prepared is mixed with live poultry spermatozoa, which may be turkey or rooster spermatozoa. The finished mixture is then stored under constant stirring at a temperature of 5-8 °C for at least 6 hours, without significant loss of quality of the spermatozoa thus stored. The ratio of medium to poultry spermatozoa when mixed is preferably 1:2, or 1:1.

The medium prepared in this way is used for liquid storage of poultry spermatozoa and for the production of insemination doses for artificial insemination of poultry.

### Overview of figures in the drawings

Fig. 1 Effect of various diluents on motility (MOT) [%] of turkey spermatozoa in vitro at 5-8 °C. Legend: Ctrl. G - control group (0.9% sodium chloride solution), SE1, SE2 a SE3 - 3 variants of the new semen extender (patent requirements), CM1, CM2 a CM3 - commercially available media. Statistically significant difference determined at the level of evidence *p < 0.05; **p < 0.01; ***p < 0.001.
Fig. 2 Effect of various diluents on progressive motility (PRO) [%] of turkey spermatozoa in vitro at 5-8 °C.
Fig. 3 Statistical comparison of the extender efficiency according to the present solution and the commercially available medium - CM1 for maintaining the total turkey spermatozoa motility [%] in vitro at 5-8 °C.
Fig. 4 Statistical comparison of the extender efficiency according to the present solution and the commercially available medium - CM1 for maintaining the progressive turkey spermatozoa motility [%] in vitro at 5-8 °C.
Fig. 5 Statistical comparison of the extender efficiency according to the present solution and the commercially available medium - CM2 for maintaining the total turkey spermatozoa motility [%] in vitro at 5-8 °C.
Fig. 6 Statistical comparison of the extender efficiency according to the present solution and the commercially available medium - CM2 for maintaining the progressive turkey spermatozoa motility [%] in vitro at 5-8 °C.
Fig. 7 Statistical comparison of the extender efficiency according to the present solution and the commercially available medium - CM3 for maintaining the total turkey spermatozoa motility [%] in vitro at 5-8 °C.
Fig. 8 Statistical comparison of the extender efficiency according to the present solution and the commercially available medium - CM3 for maintaining the progressive turkey spermatozoa motility [%] in vitro at 5-8 °C.
Fig. 9 Actual egg fertility [%] depending on age [in weeks] of females in the main laying cycle (from 33 weeks of age of the animal). Percentage of eggs out of the total number of eggs obtained after deduction of dead and unfertilized eggs.

### Examples of embodiments

The poultry sperm liquid storage medium contains a mixture of: D-levulose, α-D-glucopyranosyl-α-D-glucopyranosides, 1,3,7-trimethylxanthine, 2-aminoethanesulfonic acid, sodium chloride and water.

The method of preparing the liquid sperm storage medium is such that sodium chloride are dissolved in the water of injection (aqua pro injectione), wherein the buffer thus prepared must have an osmolarity of 270-320 mOsm.I⁻¹ and a pH in the range of 4.5 to 7.0. Subsequently, using the buffer, a D-levulose solution, a α-D-glucopyranosyl-α-D-glucopyranoside solution, a 1,3,7-trimethylxanthine solution and a 2-aminoethanesulfonic acid solution is prepared. The given solutions are mixed and, after dissolving the individual components added, a final medium mixture is produced, which can be stored at 5-8 °C for a maximum of one year, under strict aseptic conditions.

Antibiotics may be added to the medium.

The medium thus prepared is mixed with live poultry spermatozoa, which may be turkey or rooster spermatozoa. The finished mixture is then stored under constant stirring at 5-8 °C for at least 6 hours, without significant loss of quality of the spermatozoa thus stored. The ratio of medium to poultry spermatozoa when mixed is preferably 1:2, or 1:1.

The medium thus prepared is used for liquid storage of poultry spermatozoa and for the production of insemination doses for artificial insemination of poultry. The collected turkey ejaculate (Big 6 line - British United Turkey, Ltd.), heteromorphic sperm (n = 6-9), was transported in thermo-boxes at reduced temperature to the laboratory immediately after collection on the farm. Upon delivery to the laboratory, the ejaculate was processed and diluted to the required concentrations suitable for motility analysis with appropriate media - three versions of the new extender SE1, SE2 a SE3 (in more detail according to the following examples of embodiments) and three commercial media CM1 (Extendyl), CM2 (Poultry media) and CM3 (Fecondil) and basic reference solution - 0.9 % NaCl (Ctrl. G - control group). The samples thus prepared were subsequently stored at 5-8 °C with continuous stirring.

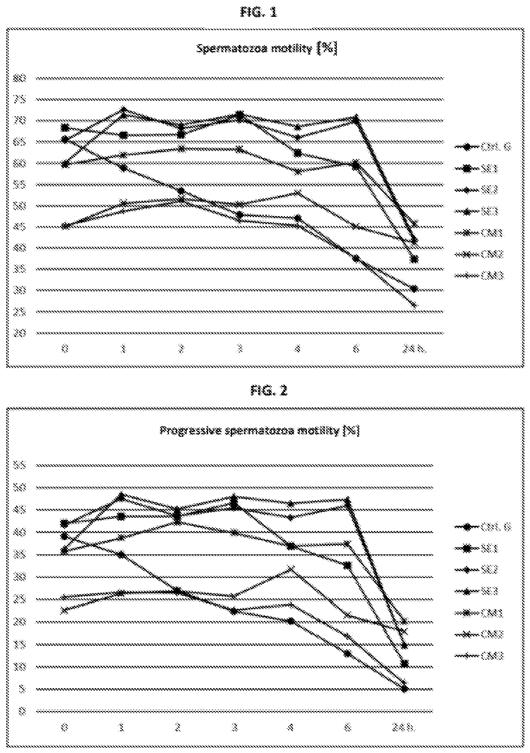

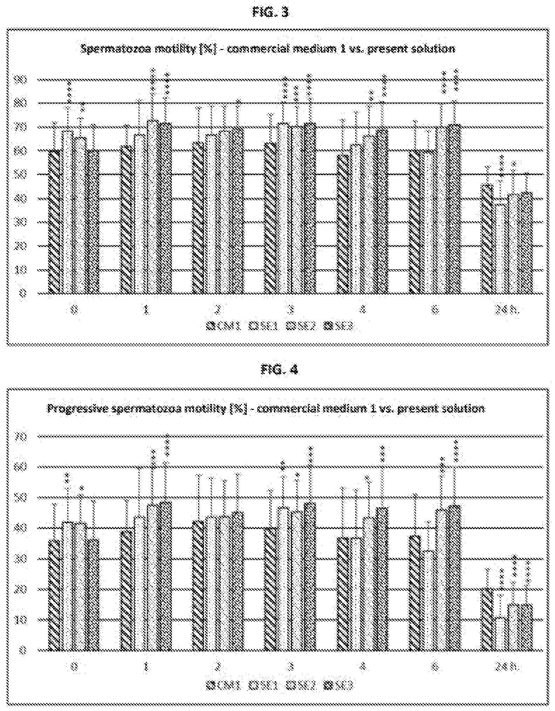

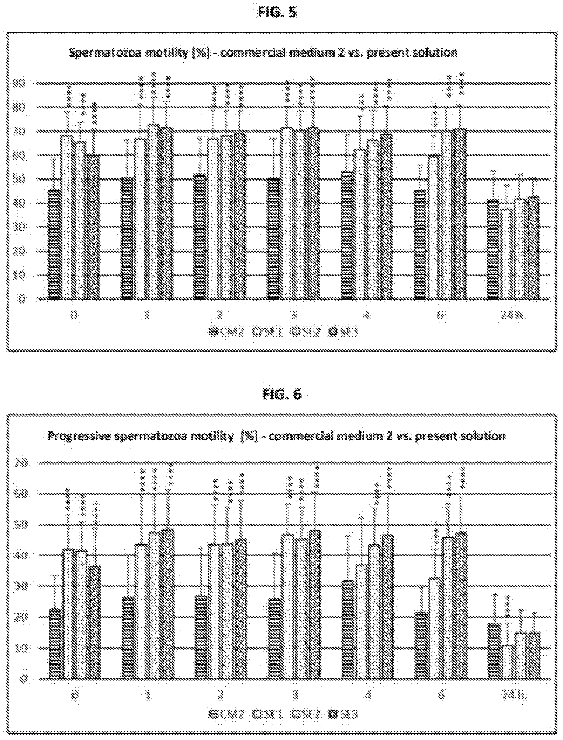

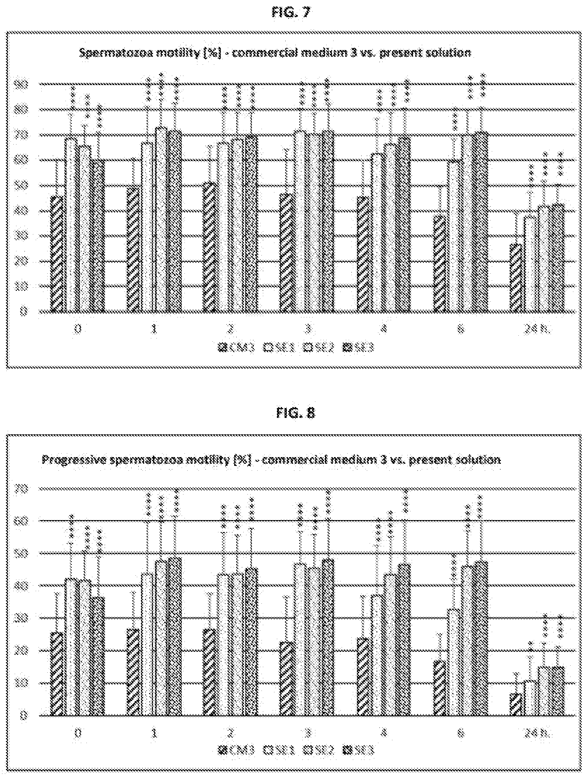

Individual spermatozoa motility parameters were evaluated and compared at seven time intervals: 0, 1, 2, 3, 4, 6 and after 24 hours (Figure 1 - 8). Spermatozoa motility (MOT) and progressive motility (PRO) analysis was performed using the Computer Assisted Sperm Analysis (CASA) method, the Sperm Vision^{®} system (Minitub, Tiefenbach, Germany) and Olympus BX 51 microscope (Olympus, Japan).

The effect of the new semen extender on the stored turkey spermatozoa motility in vitro was analyzed in the Laboratory of Cellular and Subcellular Structures, Department of Animal Physiology, Slovak University of Agriculture in Nitra. The efficiency and effectiveness of the given medium on egg fertility was proved in real conditions of large turkey breeding in cooperation with the company BRANKO NITRA, a. s. (Novozamocka 184, 949 05 Nitra -Dolne Krskany, Slovak Republic).

In determining the efficiency of the medium in maintaining the fertilizing ability of stored spermatozoa in vitro and ensuring the subsequent fertility of eggs, the standard commercial process of ejaculate collection, production of insemination doses and insemination of turkeys on the farm of the company BRANKO NITRA, a. s. was used. Immediately after collection, the collected ejaculate was diluted with the tested extender in a ratio of 2:1 and stored with constant stirring at 5-8 °C and in containers ensuring a sufficient air supply. After at least 4 hours of storage, the time required for processing, transport of the ejaculate to other farms and for the production of insemination doses, the turkeys themselves were inseminated. The number of inseminated animals in one round represented at least 6,200 females per week, which were included in egg production from the 33rd week of age. The test was performed during 4 consecutive rounds. The total number of inseminated turkeys for the entire monitored period was 24,800 turkeys per week. Actual egg fertility was calculated from the total number of eggs obtained and after deducting dead and clean eggs after transillumination.

The obtained results were statistically processed and evaluated using Microsoft Excel spreadsheet program and GraphPad Prism 8 statistical program using one-way analysis of variance One-way ANOVA (Dunnett's test). The significance of the differences was evaluated at four levels of evidence, namely P < 0.0535 (*); P < 0.01 (**); P < 0.001 (***) a P < 0.0001

### Example 1

Sample SE1 - results are documented in Fig. 1, 2, 3 and 4.

The preparation of the turkey sperm liquid storage medium was as follows:
First, a buffer containing 154 mmol.l⁻¹ sodium and 154 mmol.l⁻¹ chloride dissolved in water for injection was prepared. The buffer showed an osmolarity of 270-320 mOsm.I⁻¹ and a pH in the range of 4.5 to 7.0. Subsequently, using the buffer, a 55.51 mmol.l⁻¹ D-levulose solution; a 52.86 mmol.l⁻¹ α-D-glucopyranosyl-α-D-glucopyranoside solution; a 3.22 mmol.l⁻¹ 1,3,7-trimethylxanthine solution and a 19.98 mmol.l⁻¹ 2-aminoethanesulfonic acid solution was prepared. The solutions were mixed and after dissolving the individual components added, the extender was ready for use. The mixed medium must be stored at 5-8 °C for a maximum of one year under strict aseptic conditions. Ejaculate collection was performed by massaging the cloaca of adult male turkeys and subsequently the heteromorphic sperm was collected in syringes or in other suitable containers.

After collecting a sufficient amount of ejaculate, the dilution of the given heteromorphic sperm with the appropriate semen extender in a ratio of 2:1 was ensured within 1 hour after collection. The ejaculate treated in this way could then be stored at 5-8 °C for at least 6 hours without risk of sperm motility reduction. Prior to insemination itself, the stored diluted ejaculate must be divided into individual insemination doses.

### Example 2

SE2 - results are documented in Fig. 1, 2, 5 and 6.

The preparation of the turkey sperm liquid storage medium was as follows:
Subsequently, using the buffer according to Example no. 1, a 111.01 mmol.l⁻¹ D-levulose solution; a 66.08 mmol.l⁻¹ α-D-glucopyranosyl-α-D-glucopyranoside solution; a 6.44 mmol.l⁻¹ 1,3,7-trimethylxanthine solution and a 39.95 mmol.l⁻¹ 2-aminoethanesulfonic acid solution was prepared. The solutions were mixed and after dissolving the individual components added, the extender was ready for use. The mixed medium must be stored at 5-8 °C for a maximum of one year under strict aseptic conditions.

Ejaculate collection was performed by massaging the cloaca of adult male turkeys and subsequently the heteromorphic sperm was collected in syringes or in other suitable containers. After collecting a sufficient amount of ejaculate, the dilution of the given heteromorphic sperm with the appropriate semen extender in a ratio of 2:1 was ensured within 1 hour after collection. The ejaculate treated in this way could then be stored at 5-8 °C for at least 6 hours without risk of sperm motility reduction. Prior to insemination itself, it is necessary to divide the stored diluted ejaculate into individual insemination doses.

### Example 3

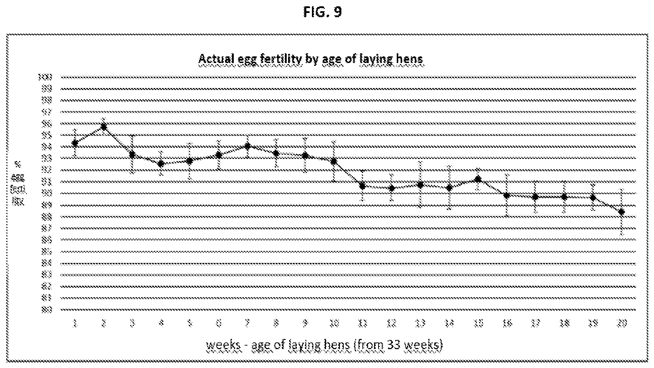

SE3 - results are documented in Fig. 1, 2, 7, 8 and 9.

The preparation of the turkey sperm liquid storage medium was as follows:
Subsequently, using the buffer according to Example no. 1, a 138.77 mmol.l⁻¹ D-levulose solution; a 79.29 mmol.l⁻¹ α-D-glucopyranosyl-α-D-glucopyranoside solution; a 12.87 mmol.l⁻¹ 1,3,7-trimethylxanthine solution and a 59.93 mmol.l⁻¹ 2-aminoethanesulfonic acid solution was prepared. The solutions were mixed and after dissolving the individual components added, the extender was ready for use. The mixed medium must be stored at 5-8 °C for a maximum of one year under strict aseptic conditions. Ejaculate collection was performed by massaging the cloaca of adult male turkeys and subsequently the heteromorphic sperm was collected in syringes or in other suitable containers.

After collecting a sufficient amount of ejaculate, the dilution of the given heteromorphic sperm with the appropriate semen extender in a ratio of 2:1 was ensured within 1 hour after collection. The ejaculate treated in this way could then be stored at 5-8 °C for at least 6 hours without risk of sperm motility reduction. Prior to insemination itself, it is necessary to divide the stored diluted ejaculate into individual insemination doses.

### Example 4

The preparation of the turkey sperm liquid storage medium was as follows: Subsequently, using the buffer according to Example no. 1, a 41.63 mmol.l⁻¹ D-levulose solution; a 39.65 mmol.l⁻¹ α-D-glucopyranosyl-α-D-glucopyranoside solution; a 2.06 mmol.l⁻¹ 1,3,7-trimethylxanthine solution and a 15.98 mmol.l⁻¹ 2-aminoethanesulfonic acid solution was prepared. The solutions were mixed and after dissolving the individual components added, the extender was ready for use. The mixed medium must be stored at 5-8 °C for a maximum of one year under strict aseptic conditions.

Within a maximum of 1 hour from the collection of ejaculate, it is necessary to ensure the dilution of the given heteromorphic sperm with the appropriate medium in a ratio of 2:1, or 1:1. The ejaculate treated in this way could then be stored at 5-8 °C for at least 6 hours without significant reduction in the quality parameters of stored spermatozoa. Prior to insemination itself, it is necessary to divide the stored diluted ejaculate in the medium into individual insemination doses and perform insemination.

### Example 5

The preparation of the turkey sperm liquid storage medium was as follows:
Subsequently, using the buffer (according to Example no. 1), a 194.27 mmol.l⁻¹ D-levulose solution; a 105.73 mmol.l⁻¹ α-D-glucopyranosyl-α-D-glucopyranoside solution; a 38.62 mmol.l⁻¹ 1,3,7-trimethylxanthine solution and a 79.90 mmol.l⁻¹ 2-aminoethanesulfonic acid solution was prepared. The solutions were mixed and after dissolving the individual components added, the extender was ready for use. The mixed medium must be stored at 5-8 °C for a maximum of one year under strict aseptic conditions. Within a maximum of 1 hour from the collection of ejaculate, it is necessary to ensure the dilution of the given heteromorphic sperm with the appropriate medium in a ratio of 2:1, or 1:1. The ejaculate treated in this way could then be stored at 5-8 °C for at least 6 hours without significant reduction in the quality parameters of stored spermatozoa. Prior to insemination itself, it is necessary to divide the stored diluted ejaculate in the medium into individual insemination doses and perform insemination.

### Example 6

The preparation of the rooster sperm liquid storage medium was as follows:
SE1, SE2 or SE3 medium was prepared according to Example No. 1, 2 or 3. Ejaculate collection of roosters was performed by massaging the cloaca of adult male roosters, wherein the heteromorphic sperm was collected in syringes or in other suitable containers. The obtained hetero sperm was then diluted with the appropriate medium in a ratio of 1:1 or 2:1. The ejaculate of roosters treated in this way can then be stored at 5-8 °C for 6 hours without the risk of significantly reducing the motility and quality of stored spermatozoa. Prior to insemination itself, it is necessary to divide the stored diluted ejaculate in the medium into individual insemination doses and it is directly ready for insemination.

### Example 7

Preparation of the poultry sperm liquid storage medium modified by the addition of antibiotics: Medium SE1, SE2 or SE3 according to Example No. 1, 2 or 3 was prepared and then the appropriate antibiotic was added to the semen extender: Tylosin^{®} with a concentration in the resulting medium from 0.625 to 5 mg.ml⁻¹, or Gentamicin with a concentration in the resulting medium from 0.1 to 0.4 mg.ml⁻¹, which represents a potentially suitable component in connection with the protection of insemination doses against microbial contamination with minimal effect on the quality of stored sperm.

### Industrial applicability

The poultry sperm liquid storage medium will be used to maintain the motility, viability and fertility of poultry sperm in the field of poultry breeding, and as a technology applied in the field of management of animal reproduction and artificial insemination.

## Claims

1. Poultry sperm storage medium, **characterized in that** it contains a mixture of D-levulose, α-D-glucopyranosyl-α-D-glucopyranoside, 1,3,7-trimethylxanthine, 2-aminoethanesulfonic acid in an aqueous sodium chloride solution.

2. Poultry sperm storage medium according to claim 1, **characterized in that** it contains chloride anions present in a sodium chloride solution with a concentration of 154 mmol.l⁻¹.

3. Poultry sperm storage medium according to claim 1 or 2, **characterized in that** the mixture contains added antibiotics.

4. Poultry sperm storage medium according to claim 3, **characterized in that** the antibiotic is Tylosin^{®} with a concentration in the final medium from 0.625 to 5 mg.ml⁻¹, or with a concentration in the final medium from 0.1 to 0.4 mg.ml⁻¹.

5. Poultry sperm storage medium according to one of the claims 1 to 4, **characterized in that** it contains added live poultry spermatozoa.

6. Poultry sperm liquid storage medium according to claim 5, **characterized in that** the poultry is a turkey.

7. Poultry sperm liquid storage medium according to claim 5, **characterized in that** the poultry is a rooster.

8. Method for preparing a poultry sperm storage medium according to one of the preceding claims, **characterized by the steps of:**
- dissolving sodium chloride in water for injection, whereby the buffer thus prepared has an osmolarity of 270-320 mOsm.I⁻¹ and a pH in the range of 4.5 to 7.0,
- using the buffer, preparing a D-levulose solution, a α-D-glucopyranosyl-α-D-glucopyranoside solution, a 1,3,7-trimethylxanthine solution and a 2-aminoethanesulfonic acid solution,
- mixing these solutions until the individual added components are disolved,
- producing a final mixture-medium, while antibiotics can optionally also be added to the mixture, and
- storing the final mixture-medium at 5-8 °C for a maximum of one year.

9. Method for preparing poultry sperm storage medium according to claim 8, **characterized in that** the D-levulose solution used in the preparation of the complex medium has a concentration from 41.63 to 194.27 mmol.l⁻¹.

10. Method for preparing poultry sperm storage medium according to claim 8 or 9, **characterized in that** the α-D-glucopyranosyl-α-D-glucopyranoside solution used in the preparation of the complex medium has a concentration from 39.65 to 105.73 mmol.l⁻¹.

11. Method for preparing poultry sperm storage medium according to one of the claims 8 to 10, **characterized in that** the 1,3,7-trimethylxanthine solution used in the preparation of the complex medium has a concentration from 2.06 to 38.62 mmol.l⁻¹.

12. Method for preparing poultry sperm storage medium according to one of the claims 8 to 11, **characterized in that** the 2-aminoethanesulfonic acid used in the preparation of the complex medium has a concentration from 15.98 to 79.90 mmol.l⁻¹.

13. Method for preparing poultry sperm storage medium according to one of the claims 8 to 12, **characterized in that** live poultry spermatozoa are added to the final mixture-medium and that the spermatozoa mixture is subsequently stored under constant stirring at a temperature of 5-8 °C for at least 6 hours.

14. Method for preparing poultry sperm storage medium according to claim 13, **characterized in that** the ratio of the final mixture-medium to the poultry spermatozoa is 1:2 or 1:1.

15. Use of a medium prepared by the method according to one of the claims 8 to 14 for the liquid storage of live poultry spermatozoa and for the production of insemination doses for artificial insemination of poultry.

## Patentansprüche

1. Aufbewahrungsmedium für Geflügelsperma, **dadurch gekennzeichnet, dass** es eine Mischung aus D-Levulose, α-D-Glucopyranosyl-α-D-glucopyranosid, 1,3,7-Trimethylxanthin und 2-Aminoethansulfonsäure in einer wässrigen Natriumchloridlösung enthält.

2. Aufbewahrungsmedium für Geflügelsperma nach Anspruch 1, **dadurch gekennzeichnet, dass** es Chloridanionen enthält, die in einer Natriumchloridlösung mit einer Konzentration von 154 mmol.l⁻¹ vorliegen.

3. Aufbewahrungsmedium für Geflügelsperma nach Anspruch 1 oder 2, **dadurch gekennzeichnet, dass** die Mischung zugesetzte Antibiotika enthält.

4. Aufbewahrungsmedium für Geflügelsperma nach Anspruch 3, **dadurch gekennzeichnet, dass** das Antibiotikum Tylosin^{®} mit einer Konzentration in dem Endmedium von 0,625 bis 5 mg.ml⁻¹ oder mit einer Konzentration in dem Endmedium von 0,1 bis 0,4 mg.ml⁻¹ ist.

5. Aufbewahrungsmedium für Geflügelsperma nach einem der Ansprüche 1 bis 4, **dadurch gekennzeichnet, dass** es zugesetzte lebende Geflügelspermatozoen enthält.

6. Medium zur flüssigen Aufbewahrung von Geflügelsperma nach Anspruch 5, **dadurch gekennzeichnet, dass** das Geflügel ein Truthahn ist.

7. Medium zur flüssigen Aufbewahrung von Geflügelsperma nach Anspruch 5, **dadurch gekennzeichnet, dass** das Geflügel ein Hahn ist.

8. Verfahren zur Herstellung eines Aufbewahrungsmediums für Geflügelsperma nach einem der vorhergehenden Ansprüche, **gekennzeichnet durch** die folgenden Schritte:
- Auflösen von Natriumchlorid in Wasser für Injektionszwecke, wobei der so hergestellte Puffer eine Osmolarität von 270-320 mOsm.I⁻¹ und einen pH-Wert in einem Bereich von 4,5 bis 7,0 aufweist,
- unter Verwendung des Puffers Herstellen einer D-Levulose-Lösung, einer α-D-Glucopyranosyl-α-D-glucopyranosid-Lösung, einer 1,3,7-Trimethylxanthin-Lösung und einer 2-Aminoethansulfonsäure-Lösung,
- Mischen dieser Lösungen bis die einzelnen zugesetzten Komponenten gelöst sind,
- Herstellen eines endgültigen Mischmediums, wobei der Mischung optional auch Antibiotika zugesetzt werden können, und
- Lagern des endgültigen Mischmediums bei 5-8 °C für maximal ein Jahr.

9. Verfahren zur Herstellung eines Aufbewahrungsmediums für Geflügelsperma nach Anspruch 8, **dadurch gekennzeichnet, dass** die bei der Herstellung des komplexen Mediums verwendete D-Levulose-Lösung eine Konzentration von 41,63 bis 194,27 mmol.l⁻¹ aufweist.

10. Verfahren zur Herstellung eines Aufbewahrungsmediums für Geflügelsperma nach Anspruch 8 oder 9, **dadurch gekennzeichnet, dass** die bei der Herstellung des komplexen Mediums verwendete α-D-Glucopyranosyl-α-D-glucopyranosid-Lösung eine Konzentration von 39,65 bis 105,73 mmol.l⁻¹ aufweist.

11. Verfahren zur Herstellung eines Aufbewahrungsmediums für Geflügelsperma nach einem der Ansprüche 8 bis 10, **dadurch gekennzeichnet, dass** die bei der Herstellung des komplexen Mediums verwendete 1,3,7-Trimethylxanthin-Lösung eine Konzentration von 2,06 bis 38,62 mmol.l⁻¹ aufweist.

12. Verfahren zur Herstellung eines Aufbewahrungsmediums für Geflügelsperma nach einem der Ansprüche 8 bis 11, **dadurch gekennzeichnet, dass** die bei der Herstellung des komplexen Mediums verwendete 2-Aminoethansulfonsäure eine Konzentration von 15,98 bis 79,90 mmol.l⁻¹ aufweist.

13. Verfahren zur Herstellung eines Aufbewahrungsmediums für Geflügelsperma nach einem der Ansprüche 8 bis 12, **dadurch gekennzeichnet, dass** lebende Geflügelspermatozoen zu dem endgültigen Mischmedium gegeben werden und dass die Spermatozoenmischung anschließend unter ständigem Rühren bei einer Temperatur von 5-8 °C für mindestens 6 Stunden gelagert wird.

14. Verfahren zur Herstellung eines Aufbewahrungsmediums für Geflügelsperma gemäß Anspruch 13, **dadurch gekennzeichnet, dass** das Verhältnis des endgültigen Mischmediums zu den Geflügelspermatozoen 1:2 oder 1:1 beträgt.

15. Verwendung eines nach dem Verfahren nach einem der Ansprüche 8 bis 14 hergestellten Mediums zur flüssigen Aufbewahrung von lebenden Geflügelspermatozoen und zur Herstellung von Besamungsdosen für die künstliche Befruchtung von Geflügel.

## Revendications

1. Milieu de stockage de sperme de volaille, **caractérisé en ce qu'**il contient un mélange de D-lévulose, d'α-D-glucopyranosyl-α-D-glucopyranoside, de 1,3,7-triméthylxanthine et d'acide 2-aminoéthanesulfonique dans une solution aqueuse de chlorure de sodium.

2. Milieu de stockage de sperme de volaille selon la revendication 1, **caractérisé en ce qu'**il contient des anions chlorure présents dans une solution de chlorure de sodium à une concentration de 154 mmol.l⁻¹.

3. Milieu de stockage de sperme de volaille selon la revendication 1 ou 2, **caractérisé en ce que** le mélange contient des antibiotiques ajoutés.

4. Milieu de stockage de sperme de volaille selon la revendication 3, **caractérisé en ce que** l'antibiotique est la Tylosine^{®} à une concentration dans le milieu final comprise entre 0,625 et 5 mg.ml⁻¹, ou à une concentration dans le milieu final comprise entre 0,1 et 0,4 mg.ml⁻¹.

5. Milieu de stockage de sperme de volaille selon l'une des revendications 1 à 4, **caractérisé en ce qu'**il contient des spermatozoïdes vivants de volaille ajoutés.

6. Milieu de stockage liquide de sperme de volaille selon la revendication 5, **caractérisé en ce que** la volaille est une dinde.

7. Milieu de stockage liquide de sperme de volaille selon la revendication 5, **caractérisé en ce que** la volaille est un coq.

8. Procédé de préparation d'un milieu de stockage de sperme de volaille selon l'une des revendications précédentes, **caractérisé par** les étapes consistant à :
- dissoudre du chlorure de sodium dans de l'eau pour injection, le tampon ainsi préparé ayant une osmolarité de 270 à 320 mOsm.I⁻¹ et un pH compris entre 4,5 et 7,0,
- à l'aide du tampon, préparer une solution de D-lévulose, une solution d'α-D-glucopyranosyl-α-D-glucopyranoside, une solution de 1,3,7-triméthylxanthine et une solution d'acide 2-aminoéthanesulfonique,
- mélanger ces solutions jusqu'à dissolution des différents composants ajoutés,
- produire un milieu final, des antibiotiques pouvant également être ajoutés au mélange de manière facultative, et
- conserver le milieu final à une température comprise entre 5 et 8 °C pendant un an au maximum.

9. Procédé de préparation d'un milieu de stockage de sperme de volaille selon la revendication 8, **caractérisé en ce que** la solution de D-lévulose utilisée dans la préparation du milieu complexe a une concentration comprise entre 41,63 et 194,27 mmol.l⁻¹.

10. Procédé de préparation d'un milieu de stockage de sperme de volaille selon la revendication 8 ou 9, **caractérisé en ce que** la solution d'α-D-glucopyranosyl-α-D-glucopyranoside utilisée dans la préparation du milieu complexe a une concentration comprise entre 39,65 et 105,73 mmol.l⁻¹.

11. Procédé de préparation d'un milieu de stockage de sperme de volaille selon l'une des revendications 8 à 10, **caractérisé en ce que** la solution de 1,3,7-triméthylxanthine utilisée dans la préparation du milieu complexe a une concentration comprise entre 2,06 et 38,62 mmol.l⁻¹.

12. Procédé de préparation d'un milieu de stockage de sperme de volaille selon l'une des revendications 8 à 11, **caractérisé en ce que** l'acide 2-aminoéthanesulfonique utilisé dans la préparation du milieu complexe a une concentration comprise entre 15,98 et 79,90 mmol.l⁻¹.

13. Procédé de préparation d'un milieu de stockage de sperme de volaille selon l'une des revendications 8 à 12, **caractérisé en ce que** des spermatozoïdes de volaille vivants sont ajoutés au milieu final et **en ce que** le mélange de spermatozoïdes est ensuite stocké sous agitation constante à une température de 5 à 8 °C pendant au moins 6 heures.

14. Procédé de préparation d'un milieu de stockage de sperme de volaille selon la revendication 13, **caractérisé en ce que** le rapport entre le milieu final et les spermatozoïdes de volaille est de 1:2 ou 1:1.

15. Utilisation d'un milieu préparé selon le procédé selon l'une des revendications 8 à 14 pour la stockage liquide de spermatozoïdes de volaille vivants et pour la production de doses d'insémination destinées à l'insémination artificielle de volailles.
